# FASCICULE DE BREVET EUROPEEN

(11) **EP 0 648 063 B1**
(45) Date de publication et mention de la délivrance du brevet: **02.01.2004**
(21) Numéro de dépôt: 94402270.6
(22) Date de dépôt: 10.10.1994
(51) Int. Cl.: H04Q 11/04, H04L 12/56

(54) **Méthode et dispositif pour la transmission d'une suite de cellules ATM**
Methode und Anlage für die Transmission von Sätzen von ATM-Zellen
Method and apparatus for transmsission of series of ATM-cells

(30) Priorité: 12.10.1993 FR 9312116
(43) Date de publication de la demande: 12.04.1995
(73) Titulaire: ALCATEL, 75008 Paris (FR)
(72) Inventeur: Daniel, Patrick, F-67400 Illkirch (FR); Szychowiak, Piotr, F-67400 Illkirch (FR)
(74) Mandataire: Sciaux, Edmond

(56) Documents cités:
- NTT REVIEW, vol.3, no.3, Mai 1991, TOKYO pages 44 - 58, XP240396 TOKIZAWA, KIKUCHI & SATO 'Transmission Technologies for BISDN'
- IEEE JOURNAL ON SELECTED AREAS IN COMMUNICATIONS, vol.11, no.2, Février 1993, NEW YORK pages 254 - 263, XP377943 MOORS & CANTONI 'ATM Receiver Implementation Issues'

## Description

L'invention concerne un procédé de transmission par cellules ATM d'informations fournies sous la forme d'une suite d'entités distinctes, identiquement structurées, correspondant chacune à un tout indépendamment exploitable, pour une application donnée, elle concerne aussi des dispositifs destinés à permettre la mise en oeuvre de ce procédé.

Ce dernier est plus particulièrement destiné à être mis en oeuvre dans le cadre d'un réseau numérique à intégration de services, de type large bande, au niveau de la couche dite d'adaptation située entre, d'une part, la couche correspondant au réseau de transfert asynchrone couramment désigné par l'acronyme ATM, et, d'autre part, la couche haute correspondant à l'application concernée, si l'on prend en compte le modèle de référence défini par la recommandation I321 émanant du C.C.I.T.T.

Les cellules mises en oeuvre pour la transmission des entités sont préférablement des cellules ATM, telles que définies par la recommandation I361 du même C.C.I.T.T.

Il est supposé que les informations à transmettre depuis une application source sont de nature analogue et qu'il est possible de les organiser en une suite d'entités de même structure où chaque entité correspond à un tout indépendamment exploitable par l'application à laquelle les informations sont destinées.

Les entités d'une suite provenant d'une même application source sont supposées destinées à être successivement transmises de manière à permettre une reconstitution du flot d'informations qui est à leur origine, elles doivent donc pouvoir être reçues à un rythme au moins relativement régulier, c'est-à-dire éventuellement avec une certaine gigue.

Les entités correspondent en pratique à des éléments modulaires d'information, par exemple sonore ou visuelle, dont les tailles respectives sont susceptibles d'être variables.

Dans le cas d'informations sonores, une entité correspond par exemple, à un ensemble de données numériques représentatives de raies d'énergie sélectionnées qui ont été calculées à partir d'un groupe de "s" échantillons successifs d'un flot d'informations sonores.

Dans le cas d'informations visuelles, une entité correspond par exemple à un ensemble de données numériques représentatives d'une image ayant un format déterminé.

L'enchaînement temporel des entités est alors le plus généralement un service interprété au niveau du destinataire.

Comme déjà indiqué, il est prévu que le débit du flux d'information transmis par les entités soit susceptible de varier, en particulier lorsque, comme dans l'exemple envisagé ci-dessus, les données d'origine relatives à chaque entité sont soumises à des opérations de quantification et de codage statistique préalablement à leur transmission.

Comme indiqué plus haut, il est essentiel que, dans toute la mesure du possible, toute entité émise puisse être récupérée après transmission de sa source à son destinataire en mode asynchrone ATM. Or, lorsque ce mode est mis en oeuvre, il y a possibilité d'apparition d'erreurs spécifiquement liées à la transmission des entités par cellule en plus des erreurs connues susceptibles de survenir au niveau des bits de données qui forment les cellules. On peut ainsi craindre la transmission d'une cellule à autre que son destinataire par le réseau chargé de cette transmission, en cas d'erreur indétectée, ou incorrectement corrigée, affectant la partie de cette cellule qui définit sa destination.

L'invention propose donc un procédé de transmission par cellules ATM d'informations analogues fournies sous la forme d'une suite d'entités distinctes, identiquement structurées, correspondant chacune à un tout indépendamment exploitable, pour une application donnée, ce procédé visant à offrir une grande qualité de service à l'utilisateur, notamment en permettant tant une bonne détection et une bonne correction des erreurs de transmission qu'une élimination des entités irrécupérables à la réception.

Chaque cellule est prévue comportant un en-tête où notamment sa destination est définie et un champ d'information, l'un et l'autre de tailles respectives standardisées.

Selon une caractéristique de l'invention, le procédé prévoit une transmission de chaque entité par l'intermédiaire de cellules dont le champ d'information est identiquement composé de plusieurs modules ayant chacun une position et une taille fixées. Un premier de ces modules constitue un indice de continuité de cellule, modulo "p", qui est incrémenté pour chaque nouvelle cellule nécessaire à la transmission par cellules successives d'une même entité.

Un second de ces modules contient des données d'une entité à transmettre. Un dernier module est constitué au moyen d'un code détecteur-correcteur d'erreur, du type bloc dit B.C.H, obtenu par calcul avant transmission, à partir de la suite de bits des autres modules du champ d'information de la cellule qui le comporte. De plus le second module du champ d'information de la première et de la dernière des cellules relatives à une même entité comportent respectivement, l'un, un marqueur caractéristique de début d'entité, situé en-tête de module, et l'autre, un marqueur caractéristique de fin d'entité, situé en fin de module.

L'invention propose aussi un dispositif, de type émetteur, pour la mise en oeuvre du procédé de transmission évoqué ci-dessus.

Selon une caractéristique de l'invention, ce dispositif, de type émetteur, comporte des moyens de cadrage d'entité pour la prise en compte des données numériques relatives à chaque entité fournie par une application source au rythme propre à cette application source, des moyens tampons d'adaptation, permettant la prise en compte de ces données numériques à un rythme local de traitement en vue de leur conditionnement en cellules successives, des moyens de codage subdivisés en des premiers moyens produisant par incrémentation les premiers modules d'indice de continuité des cellules et en des seconds moyens générant un module de code détecteur-correcteur d'erreur par cellule à partir de la suite d'éléments binaires destinée à constituer les autres modules de champ d'information fournis pour cette cellule, le dispositif comportant de plus des moyens tampons, dits de sortie, pour fournir les données des cellules dans les conditions et au rythme choisis pour la transmission.

L'invention propose également un dispositif, de type récepteur pour la mise en oeuvre du procédé de transmission.

Selon une caractéristique de l'invention, ce dispositif, de type récepteur, comporte des moyens d'extraction en réception pour dissocier le champ d'information d'une cellule reçue de l'en-tête de cette même cellule, des moyens tampons, dits d'entrée, permettant la prise en compte à un rythme local de traitement des données de champ d'information de cellule reçues, des moyens de décodage aptes à séparer le premier module et le dernier module du reste des données du champ d'information d'une cellule reçue et éventuellement à reconstituer, à l'aide du code correcteur, la partie sous surveillance du champ d'information d'une cellule reçue erronée d'au plus deux bits. Il comporte aussi des moyens pour vérifier la continuité des modules d'indice de continuité successivement reçus, des moyens pour extraire séparément le second module de chaque cellule reçue et des moyens tampons de sortie à partir duquel sont fournis soit chaque entité, soit au moins un marqueur d'erreur substitué à une entité erronée, sous la commande soit des moyens de décodage en cas de réception d'une cellule irrécupérablement erronée pour une entité, soit des moyens de vérification en cas de discontinuité d'incrémentation d'indice pour un premier module de cellule d'une entité.

L'invention, ses caractéristiques et ses avantages sont précisés dans la description qui suit en liaison avec les figures évoquées ci-dessous.

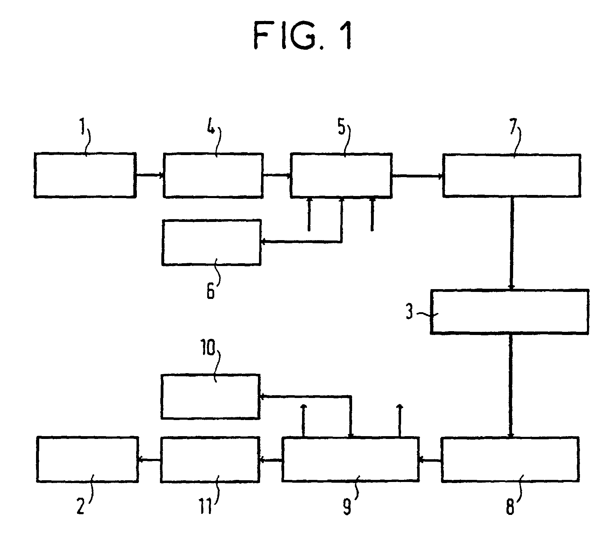

La figure 1 présente un schéma de principe d'un système susceptible de permettre la mise en oeuvre du procédé de transmission selon l'invention.

Les figures 2 et 3 présentent respectivement des schémas d'un dispositif, de type émetteur, et d'un dispositif, de type récepteur, agencés en vue de la mise en oeuvre du procédé selon l'invention.

Comme indiqué plus haut, le procédé de transmission d'informations, selon l'invention, est destiné à permettre la mise en communication d'une application source 1 avec une application destinaire 2 par l'intermédiaire d'un moyen de transmission constitué par un réseau de transfert asynchrone 3, de type ATM. L'application source 1 est supposée fournir un flot d'informations de même nature sous la forme d'une suite d'entités distinctes, identiquement structurées, qui constituent chacune un tout indépendamment exploitable par l'application à laquelle ce flot d'informations est destiné.

Un dispositif 4 est prévu pour servir d'interface à l'application source 1 à l'occasion de la transmission des suites d'entités produit par cette application vers le réseau 3, ce dispositif est organisé d'une manière qui sera détaillée plus loin pour permettre l'insertion des bits des données constituant les entités dans les champs d'information des cellules par l'intermédiaire desquelles ces données seront transmises au travers du réseau.

Un multiplexeur 5 est inséré en aval du dispositif 4 pour permettre l'insertion de bits provenant éventuellement d'autres sources, en particulier d'une unité logique de commande d'émission 6, dans le flot de cellules transmises au réseau 3.

Une interface d'émission 7 relie la sortie du multiplexeur 5 au réseau 3 proprement dit, elle assure les adaptations nécessaires au transfert par ce réseau des cellules sortant du multiplexeur.

Une interface de réception 8 assure les adaptations inverses pour les cellules transmises par le réseau à destination de l'application destinataire 2.

Un démultiplexeur 9 permet de dissocier les bits de cellule éventuellement destinés à des unités, telle que notamment une unité logique de commande en réception 10, de celles qui sont destinées à être utilisées par un dispositif 11 servant d'interface à l'application destinataire lors de la reconstitution de la suite d'entités destinées à être transmises à cette application.

D'une manière générale et comme il est connu, la réalisation des différents éléments constitutifs du système qui est évoqué ci-dessus est étroitement liée aux caractéristiques intrinsèques de l'application et du réseau considérés.

Dans la mesure où les différents éléments constitutifs du système qui sont évoqués ci-dessus sont bien connus de l'homme de métier, seuls seront décrits plus loin les éléments caractéristiques des dispositifs 4 et 11.

De manière connue et comme indiqué plus haut un réseau de transfert asynchrone ATM, tel que le réseau 3, prévoit la transmission d'informations numérisées par l'intermédiaire de cellules structurées de manière identique. Chaque cellule est prévue composée de deux champs principaux, l'un de ces champs, dit d'information, est susceptible de recevoir des éléments d'information numérisée à transmettre, l'autre, dit d'en-tête, sert notamment à définir la destination des éléments d'information contenus dans le champ d'information de la cellule.

D'une manière générale, les entités à transmettre depuis une application source sont susceptibles d'avoir une taille qui excède de beaucoup la capacité en bits du champ d'information d'une cellule, étant connu que, dans le cas des cellules structurées selon la recommandation I361 évoquée plus haut, les tailles du champ d'en-tête et du champ d'information d'une cellule sont respectivement de cinq octets et de quarante-huit octets.

Il est donc nécessaire de prévoir l'utilisation de plusieurs cellules successives pour transmettre les bits de donnes d'information relatives à une même entité à partir d'une application source et de pouvoir rassembler ces cellules au niveau de l'application destinataire après transmission pour reconstituer l'entité dont elles sont issues.

En conséquence, il est prévu d'organiser d'une manière identique le champ d'information de chaque cellule de transfert d'entité, ce champ étant scindé en plusieurs modules ayant chacun une taille et une position fixées.

Dans une forme de réalisation, ce champ d'information comporte un premier module correspondant à un indice de continuité de cellule de modulo "p" qui est incrémenté à chaque fois qu'une cellule supplémentaire est nécessaire pour la transmission d'une même entité. Le modulo est par exemple de huit impliquant donc la réservation de trois bits en tête de champ d'information par premier module.

Le module de continuité d'un premier module est par exemple forcé à zéro à l'émission pour la première cellule de chaque nouvelle entitée de manière à permettre la détection de cette cellule à la réception et la synchronisation du récepteur auquel cette entité est destinée.

La vérification de la régularité d'incrémentation des premiers modules relatifs à des cellules successivement reçues au niveau du dispositif 11 d'une application destinataire permet de détecter les pertes ou gains parasites de cellule. Les pertes de cellule sont notamment susceptibles d'être causées par des erreurs de transmission non corrigées affectant les champs d'en-tête des cellules transmises au travers du réseau 3 par l'application source ici considérée. Les gains de cellule sont notamment susceptibles d'être dus à des erreurs de transmission non corrigées affectant les champs d'en-tête de cellules émanant d'autres applications sources à destination d'autres applications destinataires.

Un second module est destiné à contenir des bits de données d'entité à transmettre, ces bits sont par exemple distribués, en fonction de leurs positions successives dans l'entité qui les comporte, dans les seconds modules des cellules de modulo croissant qui sont successivement produites pour la transmission de cette entité.

Un module supplémentaire, dit de réserve, est susceptible d'être prévu dans le champ d'information de chaque cellule.

Ce module de réserve qui occupe onze bits de champ dans la réalisation envisagée, est par exemple positionné directement à la suite du second module dans le même champ.

Un module, dit dernier module, est prévu en fin de champ d'information de chaque cellule pour un code détecteur-correcteur d'erreur. Chaque dernier module de code est calculé avant transmission à partir d'une partie de champ d'information placée sous surveillance et constituée par la suite d'éléments binaires composant les autres modules de champ d'information de la cellule qui le comporte.

Dans une forme de réalisation ce code est du type bloc dit de BOSE-CHAUDURI-HOCKENGHEM soit en abrégé B.C.H. et il est prévu pour permettre de corriger jusqu'à deux erreurs de bit dans la partie de champ d'information à partir de laquelle il est calculé.

De tels codes B.C.H sont notamment évoqués dans la seconde édition de l'ouvrage en langue anglaise de W.WESLEY PETERSON et E.J. WELDON Jr , publié par "The M.I.T. PRESS" à Cambridge, U.S.A.

Le code choisi est par exemple un pseudo-code ayant une longueur "n" et un nombre "k" de bits par bloc respectivement égaux à 384 et 366, qui est fondé sur le code connu pour lequel les valeurs de "n" et "k" sont respectivement de 511 et 493.

Le dernier module de chaque cellule qui est calculé au niveau du dispositif 4 de l'application source 1 est pris en compte au niveau du dispositif 11 de l'application destinataire 2 pour corriger les éventuelles erreurs de transmission de bit susceptibles d'affecter les bits de la partie du champ d'information d'une cellule à partir de laquelle ce dernier module a été calculé, tant que le nombre de ces erreurs n'est pas supérieur à deux par cellule.

Pour éviter qu'une cellule défectueuse puisse affecter la transmission de deux entités successives, il est prévu de compléter toute entité à l'aide de bits de bourrage afin qu'elle soit constituée de manière à occuper un nombre entier de seconds modules de cellule et à éviter ainsi de constituer des cellules composées de bits appartenant à deux entités distinctes.

Dans un exemple préféré de réalisation où le second module des cellules de transfert d'entité est composé de vingt-deux mots de seize bits, le vide susceptible de subsister à la suite des derniers mots non encore transmis d'une entité dans le second module qui les contient est rempli au moyen d'un mot particulier constituant un marqueur caractéristique de fin d'entité, ce mot étant éventuellement répété, afin d'obtenir que le second module de la dernière cellule de transmission d'une entité soit complété à capacité totale.

D'une manière voisine, il est prévu que toute cellule servant au transfert des premiers bits de données d'une nouvelle entité soit caractérisée par une insertion de bits caractéristiques de début d'entité en tête de cellule, avant les premiers bits de données. Ceci est par exemple obtenu en insérant à l'émission un mot particulier constituant un marqueur caractéristique de début d'entité en tête du second module de cellule dans lequel sont placés les mots comportant les premiers bits de données de la nouvelle entité.

A la réception, il est prévu de substituer un mot particulier constituant un marqueur caractéristique d'erreur à chacun des seconds modules reçus jusqu'à réception et détection d'un nouveau module contenant un marqueur de début d'entité, dont le module de continuité est de valeur zéro, à partir du moment où a été constatée soit une rupture d'indice de continuité affectant la suite de cellules déjà reçues, soit une impossibilité de correction d'un des mots de la partie sous surveillance du champ d'information d'une cellule à l'aide du code détecteur correspondant placé à sa suite dans la même cellule.

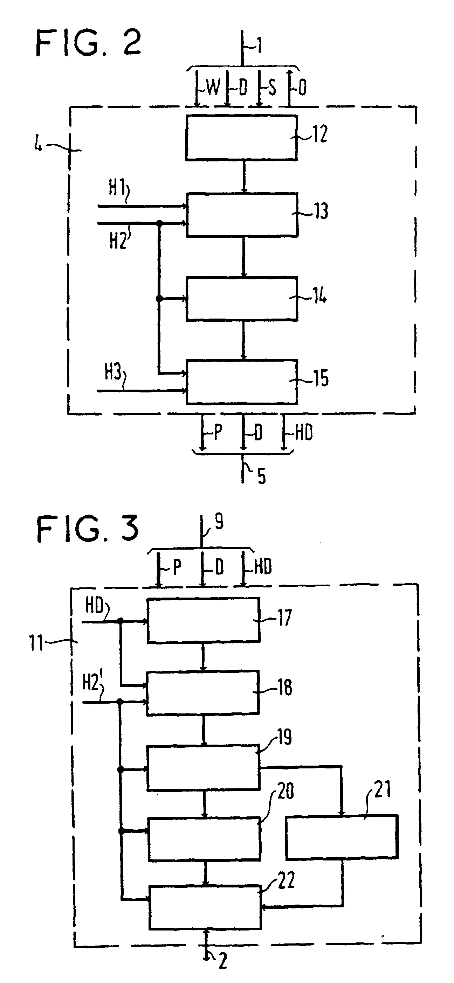

Le schéma de principe d'un dispositif 4 d'interface pour application source 1 est présenté en figure 2. Ce dispositif reçoit au niveau d'une entrée D les bits constituant les entités produites, ces bits sont transmis avec un débit éventuellement variable par l'application source, ils sont reçus par un agencement 12, dit de cadrage, chargé de leur prise en compte. Cet agencement 12, connu en lui-même de l'homme de métier, reçoit à cet effet au niveau d'une entrée S un signal d'horloge de synchronisation qui provient de l'application source et qui est destiné à lui permettre de saisir les bits parvenant par l'entrée D et de distinguer, les unes des autres, les entités successivement reçues.

L'agencement 12 comporte aussi une entrée W de commande en écriture que l'application source 1 active à l'occasion de ses envois de bits d'entité.

L'application source 1 est de plus reliée à une sortie O du dispositif 4 qui est destinée à permettre à ce dernier d'obtenir une interruption de l'envoi de bits d'entité en cas de perturbation susceptible de compromettre le traitement de ces bits dans les conditions prévues, au niveau du dispositif 4.

L'agencement 12 est relié en entrée d'un tampon 13 d'adaptation de rythme, de type connu, qui est dit d'entrée et qui est prévu pour fournir à un rythme local H2, les bits d'entité reçus de l'application source au rythme H1, de manière à en permettre le traitement par le dispositif lui-même en vue de leur conditionnement sous forme de cellules.

Dans la réalisation proposée un agencement de codage 14 est relié à la sortie du tampon d'entrée 13, il assure la production des premiers modules de cellule à l'aide d'une logique d'incrémentation non représentée, chacune des cellules successives servant au transfert d'une entité étant dotée d'un premier module obtenu par incrémentation du premier module calculé pour la cellule qui précède celle où il se trouve. L'agencement de codage 14 assure aussi la production du dernier module de chaque cellule à l'aide d'une logique de codage par bloc, non représentée ici.

Chaque dernier module de cellule correspond à un code détecteur-correcteur de type B.C.H. tel qu'évoqué plus haut.

Chaque code détecteur-correcteur d'erreur est obtenu par calcul à partir des éléments binaires pris par blocs qui constituent les autres modules de champ d'information de la cellule qui est destinée à le comporter. Il est transmis par l'agencement de codage 14 à un tampon de sortie 15 avec tous les éléments destinés à constituer avec lui la cellule pour lequel il a été calculé.

Le rythme local H2 utilisé à l'intérieur du dispositif 4 par le tampon d'entrée 13, au niveau de ses émissions, est aussi utilisé par l'agencement de codage 14 pour ses transferts et par le tampon de sortie 15 pour ses réceptions. Un rythme de transmission H3 dépendant du réseau de transfert 3 est exploité par le tampon de sortie 15 pour la transmission des cellules au travers de ce réseau à destination de l'application destinataire 2 visée.

Le dispositif 4 fournit les bits de cellule en succession à partir du circuit tampon de sortie 15 et au niveau d'une sortie D, il fournit aussi un signal d'horloge de bits au niveau d'une sortie HD et un signal caractéristique de présence de cellules par une sortie P.

Le schéma de principe d'un dispositif 11 d'interface pour application destinataire 2 est présenté en figure 3, ce dispositif 11 reçoit les signaux émanant des sorties D, HD et P qui lui sont transmis par le dispositif 4 au travers du réseau de transfert 3 et via l'interface de réception 8 et le démultiplexeur 9 qui lui sont associés.

Ces signaux sont exploités par un agencement d'extraction 17 apte à séparer le champ d'information du champ d'en-tête de chaque cellule dont les bits ont été reçus, cette séparation est susceptible d'être effectuée par des moyens classiques en technique ATM qui ne seront donc pas développés ici.

Le champ d'information obtenu à partir des bits reçus pour chaque cellule transmise est transmis à un tampon d'adaptation de rythme 18 prévu pour absorber les variations de débit de cellules caractéristique des réseaux temporels asynchrones. Ce tampon 18 est chargé de fournir à un rythme local H2', les bits d'entité reçus de l'application source au rythme HD, de manière à en permettre le traitement par les éléments qui le suivent dans le dispositif qui le comporte.

Un agencement de décodage 19 est relié à la sortie du tampon 18 il est chargé d'assurer la séparation des divers modules de chaque champ d'information reçu et en particulier l'extraction pour traitement du module de code correcteur qui constitue le dernier d'entre eux. Il permet aussi la détection, au moyen du dernier module que contient chaque champ d'information, des erreurs qui sont susceptibles d'affecter les bits des autres modules de ce champ et il en assure la correction tant que le nombre d'erreurs de bit par partie sous surveillance du champ n'est pas supérieur à deux.

Il transmet séparément d'une part les bits de premier module du champ d'information d'une cellule reçue, ces bits étant éventuellement corrigés lorsque cela a été nécessaire et possible, d'autre part les bits de données du champ d'information autres que ceux concernant le premier et le dernier module de ce champ, tout ceci étant effectué de manière connue en elle-même.

Les bits d'un champ d'information, autres que ceux concernant le premier et le dernier module de ce champ, sont transmis à un agencement 20 chargé d'extraire les bits de second module afin d'en permettre une transmission séparée.

Le premier module de chaque cellule est transmis à un agencement de vérification 21 chargé de vérifier la continuité d'incrémentation des premiers modules successivement reçus et de signaler les discontinuités, celles ci correspondant à un gain ou à une perte de cellule.

Un tampon de sortie 22 est inséré entre l'application destinataire 2 et l'ensemble formé par les agencements d'extraction 20 et de vérification 21.

Les seconds modules successivement transmis par l'agencement d'extraction 20 au tampon de sortie 22 sont destinés à être regroupés dans ce tampon pour reconstituer les flux de données des entités telles que produites par l'application source 1. Le second module de tête de chaque entité est reconnu au marqueur caractéristique de début d'entité qu'il contient, le dernier second module de chaque entité est reconnu au(x) marqueur(s) de fin d'entité qu'il contient.

Comme indiqué plus haut, tout second module considéré comme erroné de manière irrécupérable par l'agencement de décodage 19 voit ses bits de donnée remplacés par des bits de marqueur d'erreur, ce dernier est destiné à être communiqué à l'application destinataire à la place du module erroné.

Les seconds modules reçus à la suite d'un second module erroné sont aussi remplacés par le marqueur d'erreur jusqu'à parution d'un second module, non erroné, comportant un marqueur de début d'entité.

Une substitution analogue est également effectuée, lorsque l'agencement de vérification 21 constate une discontinuité d'incrémentation à l'occasion de l'arrivée d'un nouveau premier module, un marqueur d'erreur est alors substitué à tous les seconds modules, à partir de celui qui correspond au premier module pour lequel une discontinuité d'incrémentation a été constatée et tant qu'un second module contenant un marqueur de début d'entité n'a pas été reçu.

Dans une forme de réalisation, les agencements du dispositif 11 qui sont en aval du tampon d'entrée sont temporellement régis par les signaux d'horloge locale H2', et le tampon de sortie 22 fournit les données d'entité à l'application destinataire 2, via une sortie non représentée. Cette application destinataire reçoit aussi un signal d'horloge de synchronisation du dispositif 11, un signal de commande en écriture pour les données d'entité et elle dispose d'une commande lui permettant de déclencher l'interruption des envois de données par le dispositif 11, en cas de besoin.

## Revendications

1. Procédé de transmission par cellules de réseau de transfert en mode asynchrone, dit ATM, d'informations analogues fournies sous la forme d'une suite d'entités distinctes, identiquement structurées et correspondant chacune à un tout indépendamment exploitable, pour une application donnée, chaque cellule comportant un en-tête où notamment sa destination est définie et un champ d'information, l'un et l'autre de tailles respectives standardisées, **caractérisé en ce qu'**il prévoit une transmission de chaque entité par l'intermédiaire de cellules dont le champ d'information est identiquement composé de plusieurs modules ayant chacun une position et une taille fixées, un premier de ces modules constituant un indice de continuité de cellule, modulo "p", qui est incrémenté pour chaque nouvelle cellule nécessaire à la transmission par cellules successives d'une même entité, un second de ces modules contenant des données d'entité à transmettre, un dernier module étant constitué au moyen d'un code détecteur-correcteur d'erreur, du type bloc dit B.C.H, obtenu par calcul avant transmission, à partir de la suite de bits des autres modules du champ d'information de la cellule qui le comporte et **en ce que** le second module du champ d'information de la première et de la dernière des cellules relatives à une même entité comportent respectivement l'un un marqueur caractéristique de début d'entité, situé en-tête de module, et l'autre un marqueur caractéristique de fin d'entité, situé en fin de module.

2. Procédé de transmission selon la revendication 1, **caractérisé en ce que** le complément à capacité totale du second module d'information de la dernière cellule de transfert d'une entité est effectué, avant émission, par bourrage au moyen de mots binaires de même constitution que le marqueur caractéristique de fin d'entité pour conserver l'indépendance de chaque entité existante au niveau source, au cours de sa transmission en mode asynchrone.

3. Procédé de transmission selon au moins l'une des deux revendications précédentes, **caractérisé en ce qu'**en réception, il est effectué une substitution d'un marqueur caractéristique d'erreur à chacun des seconds modules d'information reçus pour une suite de cellules et ce jusqu'à détection d'un marqueur caractéristique de début d'entité dans un second module nouvellement reçu, à partir du moment où il y a eu soit une discontinuité d'incrémentation d'indice pour un premier module de cellule, soit une impossibilité de correction des erreurs qui affectent la partie sous surveillance du champ d'information d'une cellule, cette partie étant constituée par les modules de ce champ qui sont autres que le dernier module qu'il contient.

4. Dispositif, de type émetteur, pour la mise en oeuvre du procédé de transmission selon au moins l'une des revendications précédentes, **caractérisé en ce qu'**il comporte des moyens de cadrage d'entité (12) pour la prise en compte des données numériques relatives à chaque entité fournie par une application source (1) au rythme propre à cette application source, des moyens tampons d'adaptation (13), permettant la prise en compte de ces données numériques à un rythme local de traitement (H2) en vue de leur conditionnement en cellules successives, des moyens de codage (14) subdivisés en des premiers moyens produisant par incrémentation les premiers modules d'indice de continuité des cellules et en des seconds moyens générant un module de code détecteur-correcteur d'erreur par cellule à partir de la suite d'éléments binaires destinée à constituer les autres modules de champ d'information fournis pour cette cellule, le dispositif comportant de plus des moyens tampons (15), dits de sortie, pour fournir les données des cellules dans les conditions et au rythme choisis pour la transmission.

5. Dispositif, de type récepteur, pour la mise en oeuvre du procédé de transmission selon au moins l'une des revendications 1 à 3 précédentes, **caractérisé en ce qu'**il comporte des moyens d'extraction en réception (17) pour dissocier le champ d'information d'une cellule reçue de l'en-tête de cette même cellule, des moyens tampons (18), dits d'entrée, permettant la prise en compte à un rythme local de traitement (H2') des données de champ d'information de cellule reçues, des moyens de décodage (19) aptes à séparer le premier module et le dernier module du reste des données du champ d'information d'une cellule reçue et éventuellement à reconstituer, à l'aide du code correcteur, la partie sous surveillance du champ d'information d'une cellule reçue erronée d'au plus deux bits, des moyens (21) pour vérifier la continuité des modules d'indice de continuité successivement reçus, des moyens (20) pour extraire séparément le second module de chaque cellule reçue et des moyens tampons de sortie (22) à partir duquel sont fournis soit chaque entité, soit au moins un marqueur d'erreur substitué à une entité erronée, sous la commande soit des moyens de décodage en cas de réception d'une cellule erronée et irrécupérable pour une entité, soit des moyens de vérification en cas de discontinuité d'incrémentation d'indice pour un premier module de cellule d'une entité.

## Patentansprüche

1. Verfahren zur Übertragung ("Transmission") von analogen Informationen durch Übertragungsnetzzellen im asynchronen Modus, genannt "ATM-Zellen", wobei diese Informationen in Form eines Satzes klar gegeneinander abgegrenzter, identisch strukturierter Dateneinheiten geliefert werden, von denen jede einem Ganzen entspricht, das für eine gegebene Anwendung unabhängig auswertbar ist, und wobei jede Zelle einen Datenkopf aufweist, in dem insbesondere ihr Ziel definiert ist, sowie ein Informationsfeld, wobei das eine und das andere jeweils standardisierte Größen haben, **dadurch gekennzeichnet, dass** das verfahren eine Übertragung jeder Dateneinheit durch Zellen vorsieht, deren Informationsfeld in identischer weise aus mehreren Modulen besteht, von denen jedes eine feste Position und Größe hat; hierbei weist ein erstes dieser Module einen Zellenkontinuitätsindex, Modulo "p" auf, der für jede neue Zelle erhöht wird, die zur Übertragung ein und derselben Dateneinheit durch aufeinander folgende Zellen erforderlich ist; ein zweites dieser Module enthält Daten der zu übertragenden Dateneinheit, ein letztes Modul wird mit Hilfe eines Fehlerkerkennungs- und -korrektur-Codes des Blocktyps - ein sogenannter B.C.H.-Code - gebildet, der durch Berechnung vor der Übertragung ausgehend von der Bitfolge der anderen Module des Informationsfeldes der Zelle ermittelt wird, die ihn aufweist; das Verfahren ist ferner **dadurch gekennzeichnet, dass** das zweite Modul des Informationsfeldes der ersten und der letzten der Zellen, die zur selben Dateneinheit gehören, in der ersten Zelle ein charakteristisches Dateneinheitanfang-Markierungsbit aufweist, das sich am Kopf des Moduls befindet, und in der letzten Zelle ein charakteristisches Dateneinheitende-Markierungsbit, das sich am Ende des Moduls befindet.

2. Übertragungsverfahren nach Anspruch 1, **dadurch gekennzeichnet, dass** die Ergänzung bis zur vollen Kapazität des zweiten Informationsmoduls der letzten Übertragungszelle einer Dateneinheit vor dem Senden durch Auffüllen mit binären wörtern erfolgt, die ebenso aufgebaut sind wie das charakteristische Dateneinheitende-Markierungsbit, um die Unabhängigkeit jeder an der Quelle vorhandenen Dateneinheit im Verlauf ihrer Übertragung im asynchronen Modus zu bewahren.

3. Übertragungsverfahren nach mindestens einem der beiden vorhergehenden Ansprüche, **dadurch gekennzeichnet, dass** beim Empfangen für einen Satz von Zellen bei jedem der empfangenen zweiten Informationsmodule eine Ersetzung durch ein charakteristisches Fehlermarkierungsbit vorgenommen wird, und zwar bis zur Erkennung eines charakteristischen Dateneinheitanfang-Markierungsbits in einem neu empfangenen zweiten Modul, jeweils ab dem Zeitpunkt, an dem entweder eine Diskontinuität des Inkrementierungsindex für ein erstes Zellenmodul auftritt, oder eine Unmöglichkeit, Fehler zu korrigieren, welche den überwachten Teil des Informationsfeldes einer Zelle betreffen, wobei dieser Teil von anderen Modulen dieses Feldes gebildet wird als dem letzten Modul, welches dieses Feld enthält.

4. Anlage vom Typ eines Senders für die Ausführung des Übertragungsverfahrens nach mindestens einem der vorhergehenden Ansprüche, **dadurch gekennzeichnet, dass** sie Folgendes aufweist: Vorrichtungen (12) zum "Framing" ("Rahmung") von Dateneinheiten für die Berücksichtigung der digitalen Daten, die zu jeder von einer Quellanwendung (1) gelieferten Dateneinheit in dem für diese Quellanwendung eigenen Rhythmus gehören; Anpassungspuffervorrichtungen (13), mit deren Hilfe diese digitalen Daten in einem lokalen verarbeitungsrhythmus (H2) im Hinblick auf ihre Aufbereitung in aufeinander folgenden Zellen berücksichtigt werden können; Codiervorrichtungen (14), die unterteilt sind in erste Vorrichtungen, die durch Inkrementierung die ersten Kontinuitätsindexmodule der Zellen erzeugen, und in zweite Vorrichtungen, die pro Zelle ein Modul mit einem Fehlererkennungs- und -korrektur-Code generieren, und zwar ausgehend von der Folge binärer Elemente, welche die anderen für diese Zelle gelieferten Informationsfeld-Module bilden sollen; hierbei weist die Anlage außerdem Puffervorrichtungen (15), sogenannte Ausgangspuffer, auf, um die Daten der Zellen unter den Bedingungen und in dem Rhythmus zu liefern, die für die Übertragung gewählt wurden.

5. Anlage vom Typ eines Empfängers zur Ausführung des Übertragungsverfahrens nach mindestens einem der vorhergehenden Ansprüche 1 bis 3, **dadurch gekennzeichnet, dass** sie Folgendes aufweist: Auslesevorrichtungen beim Empfangen (17), um das Informationsfeld einer empfangenen Zelle vom Datenkopf derselben Zelle zu trennen; Puffervorrichtungen (18), sogenannte Eingangspuffer, mit deren Hilfe in einem lokalen Verarbeitungsrhythmus (H2') empfangene Tnformationsfelddaten berücksichtigt werden können; Decodiervorrichtungen (19), die in der Lage sind, das erste Modul und das letzte Modul von den übrigen Daten des Informationsfeldes einer empfangenen Zelle zu trennen und eventuell mit Hilfe des Korrekturcodes den überwachten Teil des Informationsfeldes einer empfangenen Zelle wiederherzustellen, die höchstens zwei fehlerhafte Bits aufweist; Vorrichtungen (21) zum Überprüfen der Kontinuität der nacheinander empfangenen Kontinuitätsindexmodule; Vorrichtungen (20) zum getrennten Auslesen des zweiten Moduls jeder empfangenen Zelle; sowie Ausgangspuffervorrichtungen (22), von denen aus entweder jede Dateneinheit oder zumindest ein Fehlermarkierungsbit geliefert wird, das an die Stelle einer fehlerhaften Dateneinheit gesetzt wird, und zwar unter der Steuerung entweder der Decodiervorrichtungen im Fall des Empfangs einer fehlerhaften und nicht wiederherstellbaren Zelle bei einer Dateneinheit, oder der Überprüfungsvorrichtungen im Fall einer Diskontinuität des Inkrementierungsindex bei einem ersten Zellenmodul einer Dateneinheit.

## Claims

1. A method of transmitting in asynchronous transfer mode (ATM) network cells analogue information supplied in the form of a series of separate, identically structured entities each corresponding to a whole, independently usable by a given application, each cell including a header in which its destination is defined and an information field, each having a respective standard size, **characterized in that** each entity is transmitted by means of cells whose information field is identically composed of a plurality of modules each of fixed position and fixed size, a first of said modules constituting a cell continuity index, modulo "p", which is incremented for each new cell needed to transmit the same entity in successive cells, a second of said modules containing entity data to be transmitted, a last module being made up of a B.C.H. block type error detector-corrector code obtained by calculation prior to transmission on the basis of the sequence of bits of other modules of the information field of the cell which includes it, and **in that** the second module of the information field of the first and the last cells relating to the same entity respectively include a start of entity marker at the start of the module and an end of entity marker at the end of the module.

2. A method according to claim 1 **characterized in that** the second information module of the last cell for transferring an entity is padded out to its full capacity prior to transmission using stuffing bits with the same constitution as the end of entity marker to preserve the independence of each entity at the source level during its transmission in asynchronous transfer mode.

3. A method according to either claim 1 or claim 2 **characterized in that** at the receiving end an error marker is substituted for each second information module received for a series of cells until a start of entity marker is detected in a newly received second module, starting either from a discontinuity in the incrementing of the index for a first cell module or from the impossibility of correcting errors affecting the monitored part of the information field of a cell, this part comprising the modules of this field other than the last module that it contains.

4. A transmitter for implementing a transmission method according to at least one of the preceding claims, **characterized in that** it includes entity framing means (12) for processing digital data relating to each entity supplied by a source application (1) at a clock rate specific to said source application, adapter buffer means (13) for processing said digital data at a local processing clock rate (H2) for packaging it into successive cells, coding means (14) divided into first means producing by incrementation the first cell continuity index module and second means generating an error detector-corrector code module for each cell from the series of bits intended to constitute the other information field modules supplied for this cell, the transmitter further including output buffer means (15) for supplying the cell data under conditions and at a clock rate selected for transmission.

5. A receiver for implementing a transmission method according to at least one of claims 1 to 3 above **characterized in that** it includes extractor means (17) at the receiving end for dissociating the information field of a cell received from the header of the same cell, input buffer means (18) for processing at a local processing clock rate (H2') the information field data of cells received, decoder means (19) adapted to separate the first module and the last module from the remainder of the information field data of the cells received, and optionally for reconstituting by means of the corrector code the monitored part of the information field of a received cell in which not more than two bits are incorrect, means (21) for checking the continuity of the continuity index modules successively received, means (20) for separately extracting the second module from each cell received and output buffer means (22) from which either each entity is supplied or at least one error marker is supplied substituted for an erroneous entity either under the control of the decoding means in the case of reception of an incorrect entity cell that cannot be corrected or under the control of verification means in the case of an index incrementing discontinuity for a first cell module of an entity.
